# EUROPÄISCHE PATENTSCHRIFT

(11) **EP 1 776 861 B1**
(45) Veröffentlichungstag und Bekanntmachung des Hinweises auf die Patenterteilung: **23.12.2009**
(21) Anmeldenummer: 06021236.2
(22) Anmeldetag: 10.10.2006
(51) Int. Cl.: A01G 3/06

(54) **Schneidgerät**
Cutting appliance
Appareil de coupe

(30) Priorität: 18.10.2005 DE 102005049665
(43) Veröffentlichungstag der Anmeldung: 25.04.2007
(73) Patentinhaber: GARDENA Manufacturing GmbH, 89079 Ulm (DE)
(72) Erfinder: Keim, Norbert, 89281 Altenstadt (DE); Offenberger, Falk, 88471 Laupheim (DE)

(56) Entgegenhaltungen:
- DE-A1- 2 839 780
- GB-A- 1 593 959
- US-A- 3 851 388

## Beschreibung

Die Erfindung betrifft ein Schneidgerät mit einer austauschbaren Messeranordnung, welche zwei oszillierend relativ zueinander bewegbare Messer enthält.

Derartige Schneidgeräte sind beispielsweise Grasscheren mit relativ zueinander um einen kleinen Winkel verdrehbaren Messern oder Strauch- oder Heckenscheren mit langgestreckten Messern, die linear relativ zueinander verschiebbar sind. Der Antrieb erfolgt typischerweise motorisch, vorzugsweise durch einen Elektromotor. Die beiden Messer der Messeranordnung sind in der Regel für den Benutzer unlösbar zu einer Einheit verbunden und die Messeranordnung wird beim Austausch als eine Baueinheit gehandhabt. Die Messerbewegung erfolgt typischerweise über eine Exzenterkupplung, wobei eine geräteseitige Exzenterkurbel als antriebsseitiges Kupplungselement in eine Aussparung eines Messers als zweitem Kupplungselement ragt. Beim Einsetzen der Messeranordnung in das Gerät müssen das messerseitige und das antriebsseitige Kupplungselement in übereinstimmende Positionen gebracht werden, um einen gegenseitigen Eingriff der Kupplungselemente in einer quer zur Antriebsrichtung verlaufenden Eingriffsrichtung zu ermöglichen. Dies ist für den Benutzer zum einen umständlich und u.U. auch mit Verletzungsgefahr verbunden.

Ein Schneidgerät dieser Art ist aus US 3,851,388 bekannt.

Der Erfindung liegt die Aufgabe zugrunde, ein Schneidgerät der eingangs genannten Art anzugeben, bei welchem der Einsatz einer Messeranordnung vereinfacht ist.

Die Erfindung ist im Patentanspruch 1 beschrieben. Die abhängigen Ansprüche enthalten vorteilhafte Ausgestaltungen und Weiterbildungen der Erfindung.

Vorteilhaft bei der vorliegenden Erfindung ist, dass beim Einsatz einer Messeranordnung in das Gerät die aktuellen Positionen von erstem und zweitem Kupplungselement in Antriebsrichtung nicht übereinstimmen müssen und die Messeranordnung auch bei nicht gegebener Positionsübereinstimmung die Messeranordnung eingesetzt werden kann, wobei wenigstens eines der Kupplungselemente entgegen einer Rückstellkraft in eine ausgerückte Stellung quer zur Antriebsrichtung verschoben wird. Bei nachfolgendem Start der Antriebsvorrichtung gelangt das antriebsseitige Kupplungselement in eine mit den messerseitigen zweiten Kupplungselement übereinstimmende Position und die Kupplungselemente rücken unter dem Einfluss der Rückstellkraft in ihre Eingriffsstellung. Das Einrücken in die Eingriffstellung erfolgt in bevorzugter Ausführung innerhalb weniger als einem Bewegungszyklus bzw. weniger als einer Umdrehung einer antreibenden Exzenterkurbel. Das Einsetzen der Messeranordnung in das Gerät erfolgt vorzugsweise zumindest teilweise mit einer Bewegungskomponente parallel zur Eingriffsrichtung der Kupplungselemente.

Das erste Kupplungselement ist vorzugsweise in Übereinstimmung mit gebräuchlichen Schneidgeräten mit Exzenterkupplungen ein exzentrisch zu einer Antriebswelle angeordnetes und eine Kreisbewegung um die Antriebswelle ausführendes Mitnehmerelement, insbesondere ein Bolzen oder eine Scheibe, welches in eine Aussparung als zweiten Kupplungselement auf Seiten der Messeranordnung eingreift, wobei die Eingriffsrichtung parallel zur Drehachse der Antriebswelle verläuft und die Kupplungselemente in Eingriffsrichtung überlappen. Die Kraftübertragung erfolgt quer, insbesondere im wesentlichen senkrecht zur Eingriffsrichtung. Die Richtung der Kraftübertragung zwischen ersten und zweiten Kupplungselement sei nachfolgend auch als Antriebsrichtung bezeichnet.

Ein wesentliches Element der vorliegenden Erfindung ist, dass die Herstellung und Erhaltung des Kupplungseingriffs erheblich verbessert wird, indem die axiale Verschiebung des ersten, exzentrisch um die Antriebsachse rotierenden Kupplungselements entlang von schräg gegen die Richtung der Antriebsachse geneigten Führungsrahmen erfolgt und die beim Antrieb des oszillierend bewegten Messers durch das exzentrisch rotierende erste Kupplungselement zwischen ersten und zweitem Kupplungselement auftretenden Kräfte quer zur Antriebsachse eine axiale Kraft auf das erste Kupplungselement in Eingriffsrichtung bewirken. Dies ist insbesondere auch dadurch von Bedeutung, dass die Kupplungsart mit dem exzentrisch rotierenden ersten Kupplungselement und dem oszillierend bewegten ovalen zweiten Kupplungselement keine den Kupplungseingriff sichernden oder verstärkenden Kupplungsstrukturen zulässt, da erstes und zweites Kupplungselement mit beständig wechselnder Position aneinander anliegen.

Die Rückstellkraft, entgegen welcher das erste Kupplungselement beim Einsetzen des Messers axial in die ausgerückte Position verschiebbar ist, braucht vorteilhafterweise nur ein Einrücken der beiden Kupplungselemente in einen anfänglichen axialen Kupplungseingriff gewährleisten, nicht aber das Halten der Eingriffsstellung, was vorteilhafterweise durch die Schrägführungen in Verbindung mit der Rückstellkraft gewährleistet ist. Dabei ist von besonderem Vorteil, dass die durch die Schrägführungen bewirkte Kraft zum Halten der Eingriffsstellung proportional zu der Antriebskraft ist und bei hoher erforderlicher Antriebskraft z. B. bei starkem Schnittgut auch die Haltekraft hoch ist. Ein Zurückweichen des Exzenters wird dadurch auch bei starkem Schnittgut zuverlässig verhindert.

Insbesondere von Vorteil ist, dass die Erhaltung der Kupplungs-Eingriffsstellung durch die Schrägführungen und die über diese beim Antrieb des Werkzeugs bewirkte axiale Kraftkomponente in Richtung der Eingriffsstellung zuverlässig gewährleistet ist und die Rückstellkraft daher gering sein kann. Dadurch wird insbesondere auch die vom Benutzer beim Einsetzen des Werkzeugs aufzubringende Kraft gering gehalten.

Die geneigten Führungsbahnen können in bevorzugter Ausführungsform durch ein vorzugsweise mehrgängiges Steilgewinde zwischen erstem Kupplungselement und rotierendem Antriebselement gegeben sein. Vorteilhafterweise ist das exzentrisch zur Antriebsachse rotierende erste Kupplungselement Teil eines Trägerkörpers. Der Trägerkörper schließt mit seinem Umfang vorteilhafterweise die Antriebsachse mit ein und ist auf der Antriebsachse verschiebbar gelagert und das Steilgewinde verläuft bevorzugt konzentrisch zur Antriebsachse an dem Trägerkörper und dem Antriebselement.

In vorteilhafter kostengünstiger Ausführungsform schließt auch das als exzentrischer Mitnehmer dienende erste Kupplungselement auf Seiten des Antriebselements mit seinem Umfang die Antriebsachse mit ein und ist auch auf dieser axial verschiebbar gelagert.

Das Gerät kann in einer ersten vorteilhaften Ausführungsform eine motorbetriebene Grasschere sein mit einer Messeranordnung, bei welcher zwei Messer um eine senkrecht zur Schneidebene verlaufende Schwenkachse relativ zueinander um einen kleinen Winkel von typischerweise weniger als 30° schwenkbar sind.

In anderer vorteilhafter Ausführungsform ist das Gerät eine Strauch- oder Heckenschere mit einer vom Gerätegehäuse weg lang gestreckten Messeranordnung, deren Messer relativ zueinander in Längsrichtung linear verschiebbar geführt sind.

Vorzugsweise ist eines der Messer der Messeranordnung bezüglich des Gerätegehäuses im Betrieb feststehend.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Draufsicht auf eine Messeranordnung,
- Fig. 2: eine Seitenansicht der Messeranordnung nach Fig. 1,
- Fig. 3: eine Schrägansicht eines Antriebsrads mit Exzenterkupplung,
- Fig. 4: eine axiale Ansicht auf das Antriebsrad nach Fig. 4,
- Fig. 5: einen Schnitt durch das Antriebsrad nach Fig. 4,
- Fig. 6: eine Seitenansicht einer zusammengesetzten Anordnung bei nicht übereinstimmenden Positionen der Kupplungselemente,
- Fig. 7: eine Draufsicht auf die Anordnung nach Fig. 6,
- Fig. 8: eine Seitenansicht mit in Eingriffspositionen befindlichen Kupplungselementen,
- Fig. 9: eine teilaufgeschnittene Schrägansicht eines Antriebsrads mit dem Exzenter-Kupplungselement in Eingriffsstellung,
- Fig. 10: eine Ansicht analog Fig. 9 mit dem Exzenter-Kupplungselement in ausgerückter Stellung,
- Fig. 11: eine Schrägansicht des Antriebsrads allein,
- Fig. 12: eine Schrägansicht des Trägerkörpers mit dem Exzenter-Kupplungselement.

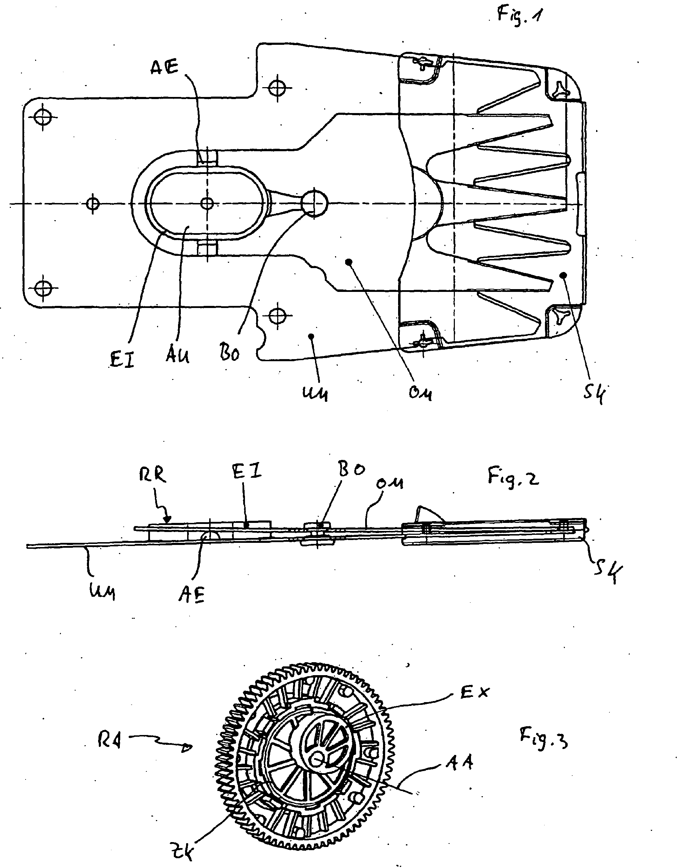

In Fig. 1 und Fig. 2 ist eine Messeranordnung einer motorisch angetriebenen Handgrasschere skizziert, welche in an sich gebräuchlicher Weise ein im Gehäuse festgelegtes Untermesser UM und ein relativ zu diesem um einen Bolzen BO als Schwenkgelenk um einen geringen Winkel oszillierend schwenkbares Obermesser OM aufweist. Die Messeranordnung bildet für den Benutzer eine einheitlich handhabbare Baueinheit. In der Skizze sind die Messerzähne durch eine Schutzkappe SK abgedeckt. Auf der den Messerzähnen abgewandten Seite des Bolzens sind die Messer durch ein Abstandselement AE voneinander beabstandet. Durch den Bolzen BO sind die Messer senkrecht zu den Messerebenen gegeneinander verspannt. Das Abstandselement ist vorzugsweise Teil eines Einsatzelements El in einer Aussparung des Obermessers. Das Einsatzelement weist seinerseits eine annähernd ovale Aussparung AU auf. Das Einsatzelement besteht vorteilhafterweise aus Kunststoff und gleitet bei der oszillierenden Bewegung auf dem Untermesser. Das Einsatzelement ragt über das Obermesser mit einem vorzugsweise die Aussparung vollständig umgebenden Rand RR hinaus. Das Einsatzelement dient mit der Aussparung AU als messerseitiges zweites Kupplungselement einer Exzenterkupplung, in welche ein antriebsseitiges erstes Kupplungselement lösbar in Eingriffsrichtung ER eingreift. Die Antriebsrichtung bzw. Kraftübertragungsrichtung der Kupplung verläuft im wesentlichen tangential bezüglich der Schwenkbewegung um den Bolzen bzw. senkrecht zu einer durch die Aussparung führenden Radiuslinie RL.

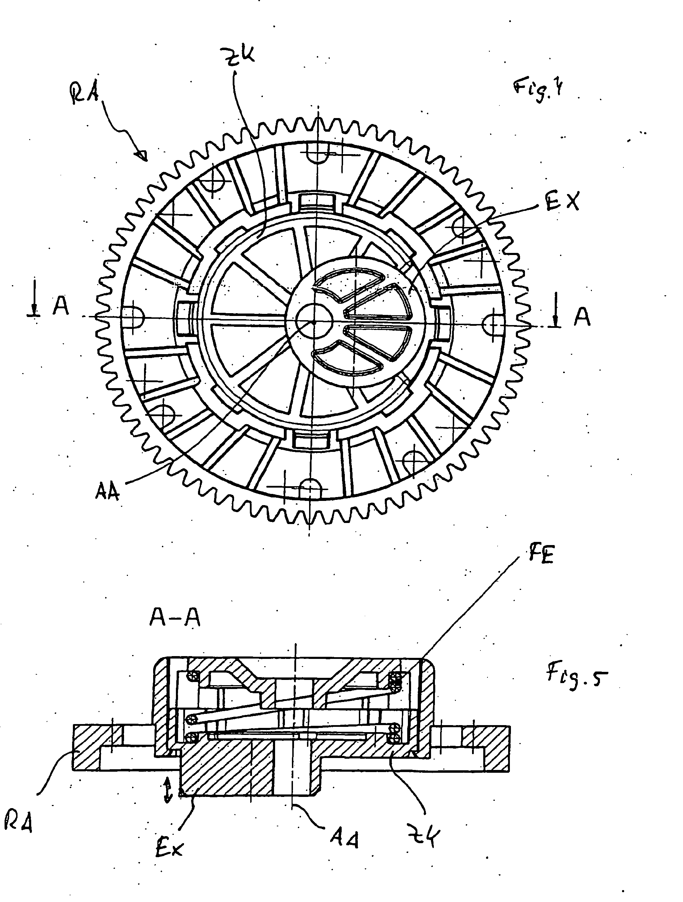

In Fig. 3 ist in Schrägansicht eine bevorzugte Ausführung eines Exzenter-Antriebselements skizziert, bei welchem ein am Außenumfang gezahntes Antriebsrad RA um eine Antriebsachse AA drehbar ist und gegen die Antriebsachse radial versetzt eine kreisrunde Exzenterscheibe EX als Mitnehmerelement bzw. erstes Kupplungselement trägt. Für den Antrieb kämmt ein nicht mit eingezeichnetes Ritzel, welches z.B. unmittelbar auf der Motorachse eines Antriebsmotors angeordnet sein kann, mit der Außenverzahnung des Antriebsrads: Exzenterscheibe EX und Aussparung AU sind so dimensioniert, dass sie mit in bezüglich der Schwenkbewegung um den Bolzen tangentialer Antriebsrichtung geringem Spiel in Eingriffsrichtung überlappend ineinander greifen können. Fig. 4 zeigt eine axiale Ansicht des Antriebsrads. Die Antriebsachse AA liegt vorteilhafterweise innerhalb des Umfangs der Exzenterscheibe. Die Exzenterscheibe ist Teil eines Zentralkörpers ZK als Trägerkörper, welcher im wesentlichen drehfest, aber axial verschiebbar mit dem Antriebsrad gekoppelt ist.

Wie in dem Querschnitt durch das Antriebsrad RA in Fig. 5 veranschaulicht, ist der Zentralkörper mit der Exzenterscheibe EX in Richtung der Antriebsachse AA entgegen der Rückstellkraft einer Feder FE aus einer mit durchgezogener Linie gezeichneten axialen Normalstellung oder Eingriffsstellung in eine ausgerückte axiale Stellung verschiebbar. Die Exzenterscheibe kann auch direkt in dem Antriebsrad axial verschiebbar gehalten sein. Der radial größere Zentralkörper bietet aber vorteilhafterweise mehr Platz für die Druckfeder FE.

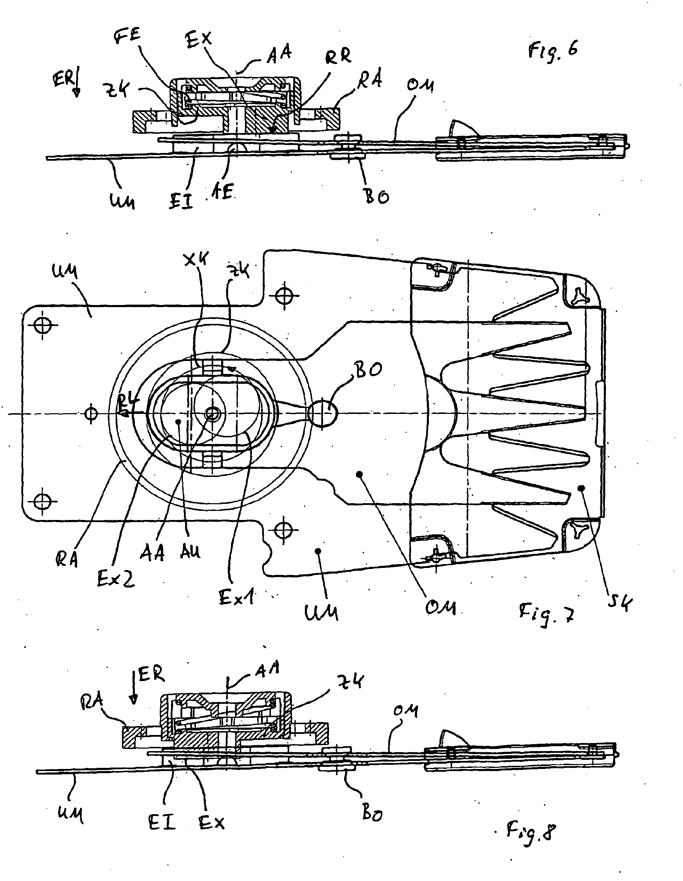

Fig. 6 zeigt in Seitenansicht eine aus einer Messeranordnung nach Fig. 1, Fig. 2 und einem Antriebselement nach Fig. 3 bis Fig. 5 in einem Gerät zusammengesetzte Anordnung, wobei die übrigen Geräteteile, welche die gezeigten Elemente in der skizzierten Position zusammenhalten, der Übersicht halber nicht mit eingezeichnet sind. In Fig. 6 ist angenommen, dass beim Einsetzen und Arretieren der Messeranordnung im Gerät die Positionen der Exzenterscheibe EX und der Aussparung AU in Antriebsrichtung nicht übereingestimmt haben, wie in Fig. 7 in axialer Ansicht als Position Ex1 veranschaulicht, und dass deshalb die Exzenterscheibe EX auf dem als Anlagefläche dienenden Rand RR des Einsatzelements El aufliegt und entgegen der Rückstellkraft der Feder FE parallel zu Drehachse AA und Eingriffsrichtung ER in die ausgerückte Stellung verschoben ist.

Fig. 7 zeigt in Draufsicht auf die Messeranordnung in Richtung der Antriebsachse des Antriebsrads schematisch dessen bezüglich des Gerätegehäuses und des Untermessers UM feststehende Umrissposition und konzentrisch hierzu den ungefähren Umriss des Zentralkörpers ZK. Ferner ist eine Kreislinie XK als äußere Begrenzung der von der Exzenterscheibe überstrichenen Kreisfläche um die Antriebsachse eingezeichnet.

Beim Einschalten des Antriebs wird das Antriebsrad RA um die Antriebsachse AA gedreht und die Exzenterscheibe gleitet auf dem Rand RR bis zu einer in Fig. 7 mit Ex2 bezeichneten Position, in welcher Übereinstimmung mit der Position der Aussparung EA in Antriebsrichtung besteht. In dieser übereinstimmenden Position rückt die Exzenterscheibe unter der Einwirkung der Rückstellkraft der Feder FE in Eingriffsrichtung ER, d. h. in Richtung der Achse AA in die Aussparung AU ein und die Kupplungselemente befinden sind wie in Fig. 8 in Seitenansicht skizziert im Kupplungseingriff. Der der Messeranordnung zuweisende Rand der Exzenterscheibe ist vorteilhafterweise angefast wie aus Fig. 5 ersichtlich.

Bei dem skizzierten bevorzugten Ausführungsbeispiel erfolgt der Kupplungseingriff immer in weniger als einer Umdrehung des Antriebsrads und somit in einer für den Benutzer kaum wahrnehmbaren kurzen Zeitspanne ab dem Einschalten des Geräts. Es zeigt sich, dass auch bei einer Messeranordnung, welche anstelle der ovalen Aussparung in dem bezüglich des Obermessers feststehenden Einsatzelement ein relativ zu dem Obermesser begrenzt verschiebbares Einsatzelement mit kreisrunder, der Exzenterscheibe angepasster Aussparung gegeben ist, ein automatisches Eingreifen der Kupplungselemente in kurzer Zeit erfolgt.

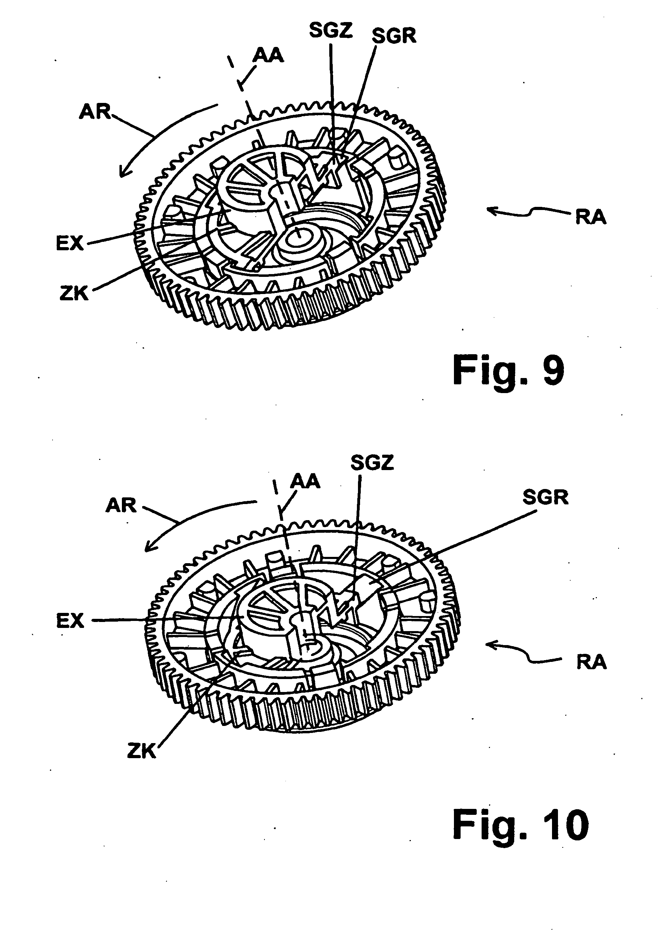

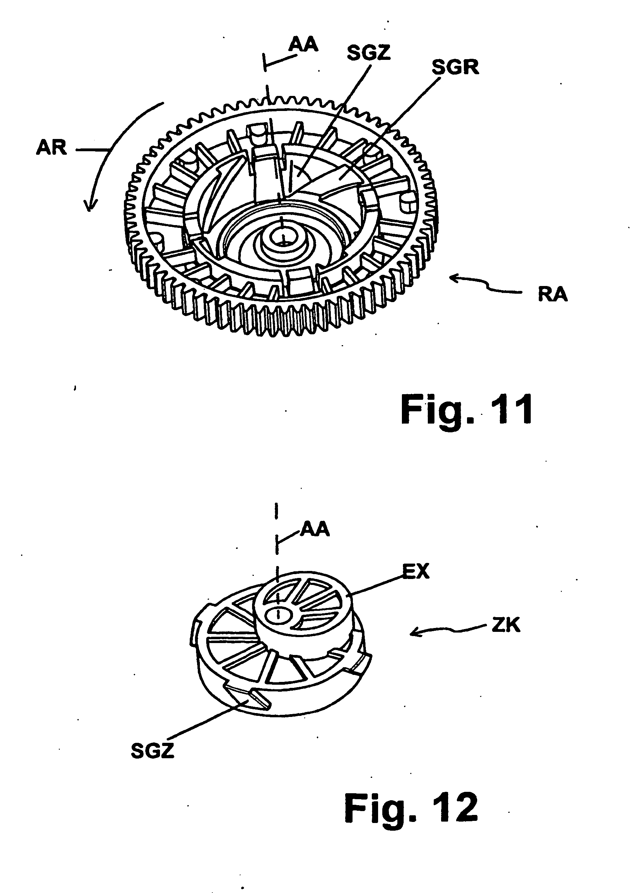

In Fig. 9 ist ein Antriebsrad RA mit eingesetztem Zentralkörper ZK in Schrägansicht mit teilweise aufgeschnittenem Zentralkörper ZK dargestellt, welcher sich in axialer Richtung in der Eingriffsstellung befindet. Das ovale zweite Kupplungselement ist mit unterbrochener Linie angedeutet. Die Schnittebene durch den Zentralkörper ZK mit dem Mitnehmerexzenter EX ist so gelegt, dass die Schnittebene die Achslinie AA der Antriebsachse enthält. Durch die teilweise aufgeschnittene Darstellung ist das Steilgewinde zwischen Antriebsrad RA und Zentralkörper deutlich zu erkennen. Das Steilgewinde ist im skizzierten Fall auf Seiten des Antriebsrads RA, wie auch aus der Schrägdarstellung des Antriebsrads RA in Alleinstellung nach Fig. 11 ersichtlich, durch Gewindenuten SGR in einer Mantelfläche um die Antriebsachse AA ausgeführt. Auf Seiten des Zentralkörpers sind dementsprechend schräg verlaufende Vorsprünge SGZ, wie aus der alleinigen Darstellung des Zentralkörpers in Fig. 12 gut ersichtlich, nach außen gegen eine Mantelfläche ausgebildet. Die Vorsprünge SGZ sind in den Nuten SGR verschiebbar geführt. Die Federanordnung zwischen Antriebsrad und Zentralkörper ist in Fig. 9 der Übersicht halber nicht mit eingezeichnet. Zentralkörper und Antriebsrad RA haben fluchtende Achsbohrungen für eine gleichfalls nicht mit eingezeichnete Achse. Der Winkel GW, um welchen die Nuten SGR und die Vorsprünge SGZ als Schrägführungen gegen zur Antriebsachse AA parallel verlaufende Mantellinien geneigt sind, liegt vorteilhafterweise in einem Bereich zwischen 20° und 60°, vorzugsweise zwischen 40° und 50° und verbindet dadurch auf vorteilhafte Weise die Eigenschaft leichter axialer Verschiebbarkeit beim Einsetzen der Messeranordnung mit gleichzeitig hoher Haltekraft beim Betrieb mit großen Antriebskräften.

Fig. 10 zeigt entsprechend zu Fig. 9 einen aufgeschnittenen Zentralkörper in das Antriebsrad eingesetzt und entlang der Führungsbahnen in die ausgerückte Stellung axial verschoben. In dieser ausgerückten Stellung wirkt die Rückstellkraft einer Federanordnung auf den Zentralkörper axial in Richtung des zweiten Kupplungselements, um bei Überdeckung des ersten und des zweiten Kupplungselements ein Einrücken in die Eingriffsstellung einzuleiten.

## Patentansprüche

1. Schneidgerät mit einer austauschbaren Messeranordnung, welche zwei relativ zueinander oszillierend bewegbare Messer (OM, UM) enthält,
- mit einer Antriebseinrichtung mit einem in einer Antriebsdrehrichtung um eine Antriebsachse (AA) rotierenden Antriebselement (RA),
- mit einem mit dem Antriebselement (RA) und exzentrisch zur Antriebsachse rotierenden ersten Kupplungselement (EX),
- mit einem zweiten Kupplungselement in Form einer ovalen Aussparung (AU) an einem der oszillierend bewegbaren Messer,
wobei
- das erste Kupplungselement (EX) in einer axialen Einrückstellung zum Antrieb des Messers in einer parallel zur Antriebsachse verlaufenden Eingriffsrichtung (ER) in das zweite Kupplungselement (AU) eingreift,
- die Messeranordnung in Richtung der Antriebsachse ohne Herstellung des Eingriffs des ersten in das zweite Antriebselement in das Gerät einsetzbar ist, indem das erste Kupplungselement entgegen einer Rückstellkraft in eine axiale Ausrückstellung verschiebbar ist,
- bei eingesetzter Messeranordnung das erste Kupplungselement in der Ausrückstellung relativ zu der Messeranordnung bewegbar ist,
- das erste Kupplungselement (EX) bei Überdeckung mit dem zweiten Kupplungselement (AU) unter der Einwirkung der Rückstellkraft unter axialer Verschiebung in das zweite Kupplungselement einrückt, **dadurch gekennzeichnet, dass**
- die Verschiebung des ersten Kupplungselements (EX) in die Eingriffsstellung relativ zu dem Antriebselement (RA) entlang von Führungsbahnen (SGR, SGZ) zwischen erstem Kupplungselement (EX) und Antriebselement (RA) erfolgt,
- die Führungsbahnen gegen die Eingriffsrichtung in der Weise geneigt sind, dass die zwischen den Kupplungselementen beim Antrieb des Werkzeugs quer zur Eingriffsrichtung auftretenden Kräfte eine Verschiebung des ersten Kupplungselements in Eingriffsrichtung (ER) oder ein Verharren in der Eingriffsstellung unterstützen.

2. Schneidgerät nach Anspruch 1, **dadurch gekennzeichnet, dass** die Führungsbahnen ein mehrgängiges Steilgewinde bilden.

3. Schneidgerät nach Anspruch 2, **dadurch gekennzeichnet, dass** das Steilgewinde konzentrisch zur Antriebsachse verläuft.

4. Schneidgerät nach Anspruch 1, **dadurch gekennzeichnet, dass** das erste Kupplungselement mit einem exzentrisch zur Antriebsachse liegenden Mitnehmer in das zweite Kupplungselement eingreift.

5. Schneidgerät nach einem der Ansprüche 1 bis 4, **dadurch gekennzeichnet, dass** das zweite Kupplungselement durch eine Aussparung zur Aufnahme des ersten Kupplungselements gebildet ist.

6. Schneidgerät nach Anspruch 5, **dadurch gekennzeichnet, dass** das zweite Kupplungselement von einem Auflagefläche (RR) umgeben ist und das erste Kupplungselement (EX) in ausgerückter Stellung auf der Auflagefläche aufliegt und gleitet.

7. Schneidgerät nach einem der Ansprüche 4 bis 6, **dadurch gekennzeichnet, dass** der Mitnehmer des ersten Kupplungselements (EX) die Antriebsachse (AA) umfasst.

8. Schneidgerät nach einem der Ansprüche 1 bis 7, **dadurch gekennzeichnet, dass** die Messer der Messeranordnung um einen Bolzen (BO) relativ zueinander verdrehbar sind.

9. Schneidgerät nach einem der Ansprüche 1 bis 1, **dadurch gekennzeichnet, dass** die Messer der Messeranordnung linear relativ zueinander verschiebbar sind.

10. Schneidgerät nach einem der Ansprüche 1 bis 9, **dadurch gekennzeichnet, dass** ein Messer der Messeranordnung relativ zum Gerät feststehend ist.

## Claims

1. Cutting appliance having an interchangeable blade arrangement which contains two blades (OM, UM) movable in an oscillating manner relative to one another,
- comprising a drive device having a drive element (RA) rotating in a drive rotation direction about a drive axis (AA),
- comprising a first coupling element (EX) rotating with the drive element (RA) and eccentrically to the drive axis,
- comprising a second coupling element in the form of an oval aperture (AU) on a blade movable in an oscillating manner,
wherein
- the first coupling element (EX) engages in the second coupling element (AU) in an axial engaging position for driving the blade in an engagement direction (ER) running parallel to the drive axis,
- the blade arrangement can be inserted into the appliance in the direction of the drive axis without producing the engagement of the first drive element in the second drive element by the first coupling element being displaceable into an axial disengagement position against a restoring force,
- when the blade arrangement is inserted, the first coupling element can be moved relative to the blade arrangement in the disengagement position,
- the first coupling element (EX), when overlapping with the second coupling element (AU), engages in the second coupling element with an axial displacement under the action of the restoring force, **characterized in that**
- the first coupling element (EX) is displaced into the engagement position relative to the drive element (RA) along guideways (SGR, SGZ) between first coupling element (EX) and drive element (RA),
- the guideways are inclined against the engagement direction in such a way that the forces occurring between the coupling elements during the drive of the tool transversely to the engagement direction assist displacement of the first coupling element in the engagement direction (ER) or retention in the engagement position.

2. Cutting appliance according to Claim 1, **characterized in that** the guideways form a multi-start coarse-pitch thread.

3. Cutting appliance according to Claim 2, **characterized in that** the coarse-pitch thread runs concentrically to the drive axis.

4. Cutting appliance according to Claim 1, **characterized in that** the first coupling element engages in the second coupling element by means of a driver lying eccentrically to the drive axis.

5. Cutting appliance according to one of Claims 1 to 4, **characterized in that** the second coupling element is formed by an aperture for accommodating the first coupling element.

6. Cutting appliance according to Claim 5, **characterized in that** the second coupling element is surrounded by a bearing surface (RR), and the first coupling element (EX) rests and slides on the bearing surface in the disengaged position.

7. Cutting appliance according to one of Claims 4 to 6, **characterized in that** the driver of the first coupling element (EX) includes the drive axis (AA).

8. Cutting appliance according to one of Claims 1 to 7, **characterized in that** the blades of the blade arrangement are rotatable relative to one another about a pin (BO).

9. Cutting appliance according to one of Claims 1 to 8, **characterized in that** the blades of the blade arrangement are displaceable linearly relative to one another.

10. Cutting appliance according to one of Claims 1 to 9, **characterized in that** one blade of the blade arrangement is fixed relative to the appliance.

## Revendications

1. Appareil de coupe comprenant un agencement de couteaux remplaçable, qui contient deux couteaux (OM, UM) déplaçables de manière oscillante l'un par rapport à l'autre,
- avec un dispositif d'entraînement comprenant un élément d'entraînement (RA) tournant dans le sens de rotation d'entraînement autour d'un axe d'entraînement (AA),
- avec un premier élément d'accouplement (EX) tournant avec l'élément d'entraînement (RA) et de manière excentrée par rapport à l'axe d'entraînement,
- avec un deuxième élément d'accouplement en forme d'évidement ovale (AU) sur l'un des couteaux déplaçables de manière oscillante,
- le premier élément d'accouplement (EX) venant en prise dans une position d'embrayage axiale dans le deuxième élément d'accouplement (AU) pour l'entraînement des couteaux dans une direction d'engagement (ER) s'étendant parallèlement à l'axe d'entraînement,
- l'agencement de couteaux pouvant être inséré dans l'appareil dans la direction de l'axe d'entraînement sans créer d'engagement du premier élément d'entraînement dans le deuxième élément d'entraînement, en ce que le premier élément d'accouplement peut être déplacé à l'encontre d'une force de rappel dans une position de débrayage axiale,
- et lorsque l'agencement de couteaux est inséré, le premier élément d'accouplement pouvant être déplacé dans la position de débrayage par rapport à l'agencement de couteaux,
- le premier élément d'accouplement (EX) s'embrayant avec déplacement axial dans le deuxième élément d'accouplement lorsqu'il recouvre le deuxième élément d'accouplement (AU) sous l'effet de la force de rappel,
**caractérisé en ce que**
- le déplacement du premier élément d'accouplement (EX) dans la position d'engagement par rapport à l'élément d'entraînement (RA) s'effectuant le long de pistes de guidage (SGR, SGZ) entre le premier élément d'accouplement (EX) et l'élément d'entraînement (RA),
- les pistes de guidage étant inclinées vers la direction d'engagement de telle sorte que les forces se produisant transversalement à la direction d'engagement entre les éléments d'accouplement lors de l'entraînement de l'outil supportent un déplacement du premier élément d'accouplement dans la direction d'engagement (ER) ou un blocage dans la position d'engagement.

2. Appareil de coupe selon la revendication 1, **caractérisé en ce que** les pistes de guidage forment un filetage raide à plusieurs pas.

3. Appareil de coupe selon la revendication 2, **caractérisé en ce que** le filetage raide s'étend concentriquement à l'axe d'entraînement.

4. Appareil de coupe selon la revendication 1, **caractérisé en ce que** le premier élément d'accouplement vient en prise dans le deuxième élément d'accouplement avec un dispositif d'entraînement situé de manière excentrée par rapport à l'axe d'entraînement.

5. Appareil de coupe selon l'une quelconque des revendications 1 à 4, **caractérisé en ce que** le deuxième élément d'accouplement est formé par un évidement pour recevoir le premier élément d'accouplement.

6. Appareil de coupe selon la revendication 5, **caractérisé en ce que** le deuxième élément d'accouplement est entouré par une surface de support (RR) et le premier élément d'accouplement (EX) repose et glisse sur la surface d'appui dans la position débrayée.

7. Appareil de coupe selon l'une quelconque des revendications 4 à 6, **caractérisé en ce que** le dispositif d'entraînement du premier élément d'accouplement (EX) comprend l'axe d'entraînement (AA).

8. Appareil de coupe selon l'une quelconque des revendications 1 à 7, **caractérisé en ce que** les couteaux de l'agencement de couteaux peuvent tourner autour d'un boulon (BO) l'un par rapport à l'autre.

9. Appareil de coupe selon l'une quelconque des revendications 1 à 8, **caractérisé en ce que** les couteaux de l'agencement de couteaux peuvent être déplacés linéairement l'un par rapport à l'autre.

10. Appareil de coupe selon l'une quelconque des revendications 1 à 9, **caractérisé en ce qu'**un couteau de l'agencement de couteaux est fixe par rapport à l'appareil.
